# EUROPEAN PATENT APPLICATION

(11) **EP 4 769 914 A1**
(43) Date of publication of application: **01.07.2026**
(21) Application number: 25224621.0
(22) Date of filing: 17.12.2025
(51) Int. Cl.: H02K 15/043

(54) **3D STAMPING AND FORMING DEVICE FOR WAVE-WOUND SLEEVE**

(30) Priority: 25.12.2024 CN 202411930639
(71) Applicant: UPTEC Intelligent Manufacturing (Wuxi) Co., Ltd., Wuxi City 214000 (CN)
(72) Inventor: YE, Xin, Wuxi City, Jiangsu Province (CN)
(74) Representative: Faggioni, Carlo Maria

(57) **Abstract**

A 3D stamping and forming device for a wave-wound sleeve is disclosed. The stamping and forming device includes a workbench, where a top plate is installed on the top of the workbench, two installation plates symmetrically arranged are installed on a working surface of the top plate, and a support assembly for winding the wave-wound sleeve is provided between the two installation plates; several upper end stamping assemblies for stamping and forming an upper end of the wave-wound sleeve are provided outside the support assembly; and lower end stamping assemblies for stamping and forming a lower end of the wave-wound sleeve are respectively provided on two sides of a top of the support assembly. The 3D stamping and forming device can stamp coiled 2D wave-wound wires, thereby stamping and forming upper ends, lower ends, and side ends of 3D preformed wave-wound wires. Compared with the fact that linear 2D wave-wound wires are directly stamped to form 3D wave-wound wires using conventional methods, the present invention reduces risks associated with direct stamping.

## Description

### FIELD OF TECHNOLOGY

The present invention belongs to the technical field of stator wave-wound wire forming and specifically relates to a 3D stamping and forming device for a wave-wound sleeve.

### BACKGROUND

3D forming technology for stator wave-wound wires is a revolutionary innovation in the field of motor manufacturing. The use of wave windings and 3D forming processes not only significantly improves motor performance but also promotes the development of motor manufacturing towards automation and intelligence. With the continuous improvement of the technology, it will surely play a more significant role in fields such as new energy vehicles, aerospace, and renewable energy, providing solid technical support for the development of high-efficiency and energy-saving devices.

For specific stator designs (such as slotless windings or stators with special shapes), a 3D wave-wound wire forming process is adopted, that is, wave-wound wires are formed by a 2D wave-wound forming process, and then subjected to 3D assembling or processing, to achieve 3D forming of the wave-wound wires.

Since a conventional 3D forming device directly stamps and forms the 2D formed linear wave-wound wires, and the 2D wires are relatively loose and prone to deformation, this often leads to winding disorder. Therefore, the 2D formed wave-wound wires need to be pre-coiled before being subjected to 3D stamping, and a device capable of 3D stamping the coiled wave-wound wires is required.

### SUMMARY OF THE INVENTION

To address the above shortcomings, the present invention provides a 3D stamping and forming device for a wave-wound sleeve, and the device includes a workbench, where a top plate is installed on the top of the workbench, two installation plates symmetrically arranged are installed on a working surface of the top plate, and a support assembly for winding the wave-wound sleeve is provided between the two installation plates;
several upper end stamping assemblies for stamping and forming an upper end of the wave-wound sleeve are provided outside the support assembly;
lower end stamping assemblies for stamping and forming a lower end of the wave-wound sleeve are respectively provided on two sides of a top of the support assembly;
side end stamping assemblies for stamping a side end of the wave-wound sleeve are provided on two sides of a bottom of the support assembly;

Furthermore, the support assembly includes a support base fixedly installed on the working surface of the top plate; an inner die base is installed on the top of the support base, wire supporting cylinders are fixedly installed on the top of a middle section of the inner die base and at the bottom thereof respectively, and output ends of the wire supporting cylinders are fixedly connected to wire support blocks, and the wire support blocks support the wave-wound sleeve via a U-shaped groove;
and the upper end bottom die, a lower end bottom die, and a side end bottom die matching with the upper end stamping assembly, the lower end stamping assembly, and the side end stamping assembly are respectively installed on an outer ring of the inner die base.

Furthermore, the number of upper end stamping assemblies is three, and the three upper end stamping assemblies are respectively installed between the two installation plates, and respectively positioned at the exact left and exact right of the support assembly and directly above the support assembly; and these directions are perpendicular to each other, forming three orthogonal directions with an angle of 90 degrees between each pair;
each of the upper end stamping assemblies includes an upper end assembling base and an upper end stamping cylinder installed on the upper end assembling base; the upper end assembling base is fixed to an assembling surface of the installation plate positioned at a rear side; an upper end connecting base is installed on an output end of the upper end stamping cylinder, and is slidably installed on the assembling surface of the installation plate; and an upper end stamping die matching with an upper end bottom die is installed at one end of the upper end connecting base close to the support assembly.

Furthermore, the lower end stamping assembly includes two lower end assembling bases that are symmetrically distributed left and right with a Y-axis of the assembling surface of the installation plate as an axis, and are fixed to the installation plate at an angle of 45 degrees with the Y-axis; a lower end stamping cylinder is installed on the top of the lower end assembling base, and an output end of the lower end stamping cylinder is fixed to a lower end connecting base; the lower end connecting base is slidably connected to the assembling surface of the installation plate; and a lower end stamping die matching with the lower end bottom die is installed at one end of the lower end connecting base close to the support assembly.

Furthermore, the side end stamping assembly includes two side end assembling plates that are respectively arranged at an angle of 45 degrees with the adjacent upper end stamping assembly on a same side; the side end assembling plates are installed on the assembling surface of the installation plate; a side end stamping cylinder is installed on each of the side end assembling plates; and a side end stamping die matching with the side end bottom die is installed at an output end of the side end stamping cylinder.

Furthermore, middle parts of the two installation plates are symmetrically provided with notches for loading and unloading the wave-wound sleeve.
Compared with the prior art, the present invention has the following beneficial effects: the 3D stamping and forming device can stamp coiled 2D wave-wound wires, thereby stamping and forming the upper ends, lower ends, and side ends of 3D preformed wave-wound wires. Compared with the fact that 2D linear wave-wound wires are directly stamped to form 3D wave-wound wires using conventional methods, the present invention reduces risks associated with direct stamping, making 3D formed wave-wound wires more stable and reducing deformation.

### BRIEF DESCRIPTION OF THE DRAWINGS

FIG. 1 is a perspective view of a 3D stamping and forming device for a wave-wound sleeve according to the present invention.
FIG. 2 is a schematic diagram of an overall structure according to the present invention.
FIG. 3 is a schematic diagram of a support assembly according to the present invention.
FIG. 4 is a schematic diagram of a formed wave-wound sleeve according to the present invention.

### DESCRIPTION OF THE EMBODIMENTS

To facilitate understanding of the present invention, the device of the present invention will be described more comprehensively below with reference to relevant drawings. Embodiments of the device are provided in the accompanying drawings. However, the device can be implemented in many different forms and is not limited to the embodiments described herein. On the contrary, the purpose of providing these embodiments is to make the disclosures of the present invention more thorough and comprehensive.

In the description of the present invention, it should be noted that unless otherwise specified and defined explicitly, the terms "mount," "connect," and "arrange" should be understood in their general senses. For example, they may refer to a fixed connection and arrangement, and may refer to a detachable connection or arrangement, or an integral connection and arrangement. For those skilled in the art, the specific meanings of the above terms in the present invention can be understood according to the specific circumstances.

In the drawings the following reference numbers are consistently used: 1, workbench; 2, top plate; 3, installation plate; 4, support assembly; 401, support base; 402, inner die base; 403, wire supporting cylinder; 404, wire support block; 5, upper end stamping assembly; 501, upper end assembling base; 502, upper end stamping cylinder; 503, upper end connecting base; 504, upper end stamping die; 6, lower end stamping assembly; 601, lower end assembling base; 602, lower end stamping cylinder; 603, lower end connecting base; 604, lower end stamping die; 7, side end stamping assembly; 701, side end assembling plate; 702, side end stamping cylinder; 703, side end stamping die; 8, upper end bottom die; 9, lower end bottom die; 10, side end bottom die.

### Embodiments

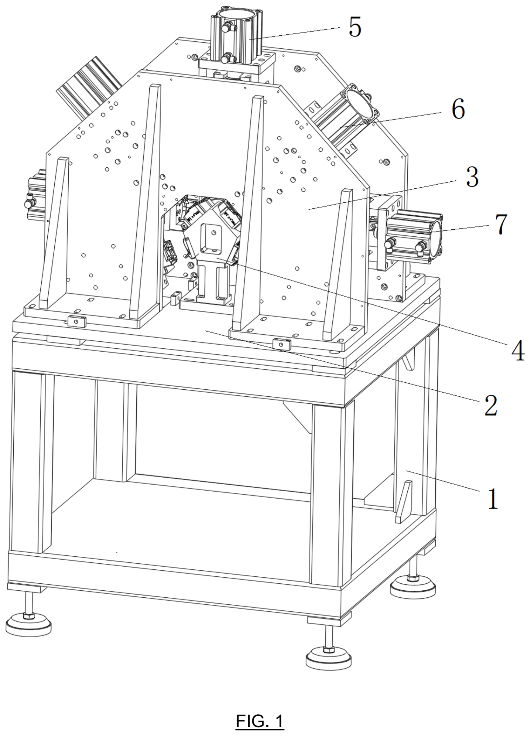

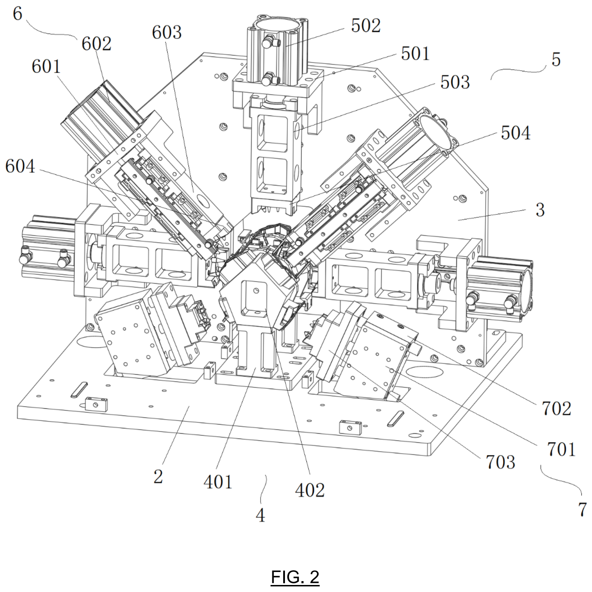

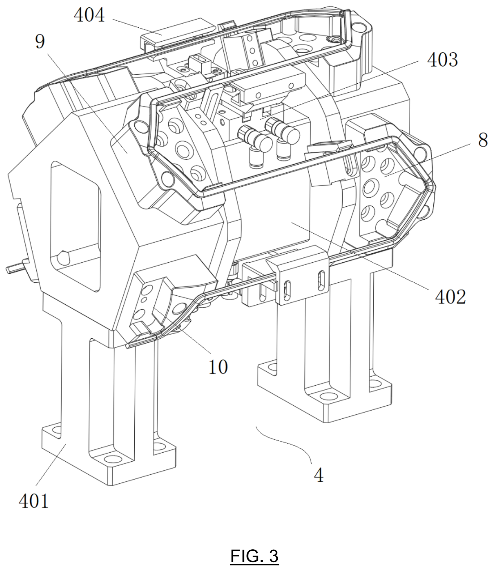

As shown in FIG. 1 to FIG. 3, the embodiment provides a 3D stamping and forming device for a wave-wound sleeve, and the device includes a workbench 1, where a top plate 2 is installed on the top of the workbench 1, two installation plates 3 symmetrically arranged are installed on a working surface of the top plate 2, and middle parts of the two installation plates 3 are symmetrically provided with notches for loading and unloading the wave-wound sleeve. The specifications and dimensions of the notches are adjusted according to actual needs to facilitate picking and placing the wave-wound wires by an operator. A support assembly 4 for winding the wave-wound sleeve is provided between the two installation plates 3.

Specifically, the support assembly 4 includes a support base 401 fixedly installed on the working surface of the top plate 2; an inner die base 402 is installed on the top of the support base 401, wire supporting cylinders 403 are fixedly installed on the top of a middle section of the inner die base 402 and at the bottom thereof respectively, and output ends of the wire supporting cylinders 403 are fixedly connected to wire support blocks 404, and the wire support blocks 404 support the wave-wound sleeve (namely, the coiled wave-wound wire, the same meaning will not be repeated hereinafter) via a U-shaped groove, preventing displacement during stamping and ensuring stamping quality.

Additionally, the upper end bottom die 8, a lower end bottom die 9, and a side end bottom die 10 matching with the upper end stamping assembly 5, the lower end stamping assembly 6, and the side end stamping assembly 7 are respectively installed on an outer ring of the inner die base 402. This one-to-one correspondence facilitates subsequent stamping of each bent section of the wave-wound sleeve.

Several upper end stamping assemblies 5 for stamping and forming an upper end of the wave-wound sleeve are provided outside the support assembly 4.

Specifically, the number of upper end stamping assemblies 5 is three, and the three upper end stamping assemblies 5 are respectively installed between the two installation plates 3, and respectively positioned at the exact left and exact right of the support assembly 4 and directly above the support assembly; and these directions are perpendicular to each other, forming three orthogonal directions with an angle of 90 degrees between each pair;
each of the upper end stamping assemblies 5 include an upper end assembling base 501 and an upper end stamping cylinder 502 installed on the upper end assembling base 501; the upper end assembling base 501 is fixed to an assembling surface of the installation plate 3 positioned at a rear side; an upper end connecting base 503 is installed on an output end of the upper end stamping cylinder 502, and is slidably installed on the assembling surface of the installation plate 3; and an upper end stamping die 504 matching with an upper end bottom die 8 is installed at one end of the upper end connecting base 503 close to the support assembly 4.

It should be noted that the number and angle settings of the upper end stamping assemblies 5 are adjusted according to the actual span and number of the U-shaped copper wire.

Lower end stamping assemblies 6 for stamping and forming a lower end of the wave-wound sleeve are respectively provided on two sides of a top of the support assembly 4.

Specifically, the lower end stamping assembly 6 includes two lower end assembling bases 601 that are symmetrically distributed left and right with a Y-axis of the assembling surface of the installation plate 3 as an axis, and are fixed to the installation plate 3 at an angle of 45 degrees with the Y-axis; a lower end stamping cylinder 602 is installed on the top of the lower end assembling base 601, and an output end of the lower end stamping cylinder 602 is fixed to a lower end connecting base 603; the lower end connecting base 603 is slidably connected to the assembling surface of the installation plate 3; and a lower end stamping die 604 matching with the lower end bottom die 9 is installed at one end of the lower end connecting base 603 close to the support assembly 4.

Side end stamping assemblies 7 for stamping a side end of the wave-wound sleeve are provided on two sides of a bottom of the support assembly 4.

Specifically, the side end stamping assembly 7 includes two side end assembling plates 701 that are respectively arranged at an angle of 45 degrees with the adjacent upper end stamping assembly 5 on a same side; the side end assembling plates 701 are installed on the assembling surface of the installation plate 3; a side end stamping cylinder 702 is installed on each of the side end assembling plates 701; and a side end stamping die 703 matching with the side end bottom die 10 is installed at an output end of the side end stamping cylinder 702.

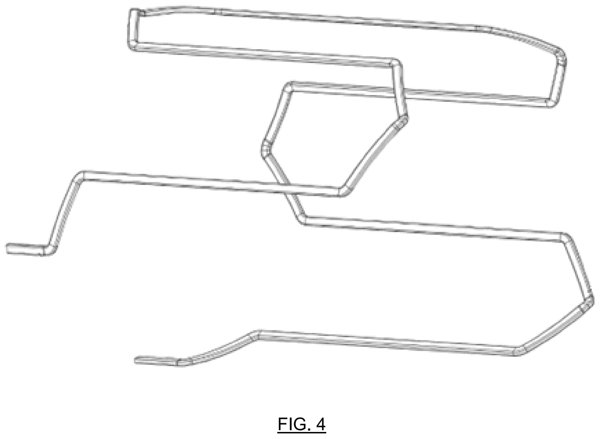

For the 3D stamping and forming device for a wave-wound sleeve described in the embodiment, the preformed wave-wound is sleeved outside the inner die base 402. The wire supporting cylinder 403 pushes the wire support block 404 to move, such that the wire support block 404 limits the copper wire via the U-shaped groove. Subsequently, the upper end stamping cylinders 502, the lower end stamping cylinders 602, and the side end stamping cylinders 702 operate synchronously, driving their respective upper end stamping die 504, lower end stamping die 604, and side end stamping die 703 to stamp the upper end bottom die 8, the lower end bottom die 9, and the side end bottom die 10 positioned inside the wave-wound sleeve, thereby completing stamping and forming operation of the wave-wound sleeve. The formed wave-wound sleeve is shown in FIG. 4.

It should be noted that the structure described in the present invention can be implemented in various forms and is not limited to the embodiments described herein. Any equivalent transformation made by those skilled in the art based on the content of this specification and accompanying drawings, direct or indirect applications in other related technical fields, such as loading and unloading of other items, should fall within the scope of patent protection of the present invention as defined by the appended claims.

## Claims

1. A 3D stamping and forming device for a wave-wound sleeve, comprising a workbench (1), wherein a top plate (2) is installed on the top of the workbench (1), two installation plates (3) symmetrically arranged are installed on a working surface of the top plate (2), and a support assembly (4) for winding the wave-wound sleeve is provided between the two installation plates (3);
several upper end stamping assemblies (5) for stamping and forming an upper end of the wave-wound sleeve are provided outside the support assembly (4);
lower end stamping assemblies (6) for stamping and forming a lower end of the wave-wound sleeve are respectively provided on two sides of a top of the support assembly (4);
side end stamping assemblies (7) for stamping a side end of the wave-wound sleeve are provided on two sides of a bottom of the support assembly (4);
the number of upper end stamping assemblies (5) is three, and the three upper end stamping assemblies (5) are respectively installed between the two installation plates (3), and respectively positioned at the exact left and exact right of the support assembly (4) and directly above the support assembly; and these directions are perpendicular to each other, forming three orthogonal directions with an angle of 90 degrees between each pair;
each of the upper end stamping assemblies (5) comprises an upper end assembling base (501) and an upper end stamping cylinder (502) installed on the upper end assembling base (501); the upper end assembling base (501) is fixed to an assembling surface of the installation plate (3) positioned at a rear side; an upper end connecting base (503) is installed on an output end of the upper end stamping cylinder (502), and is slidably installed on the assembling surface of the installation plate (3); and an upper end stamping die (504) matching with an upper end bottom die (8) is installed at one end of the upper end connecting base (503) close to the support assembly (4).

2. The 3D stamping and forming device for a wave-wound sleeve according to claim 1, wherein the support assembly (4) comprises a support base (401) fixedly installed on the working surface of the top plate (2); an inner die base (402) is installed on the top of the support base (401), wire supporting cylinders (403) are fixedly installed on the top of a middle section of the inner die base (402) and at the bottom thereof respectively, and output ends of the wire supporting cylinders (403) are fixedly connected to wire support blocks (404), and the wire support blocks (404) support the wave-wound sleeve via a U-shaped groove;
and the upper end bottom die (8), a lower end bottom die (9), and a side end bottom die (10) matching with the upper end stamping assembly (5), the lower end stamping assembly (6), and the side end stamping assembly (7) are respectively installed on an outer ring of the inner die base (402).

3. The 3D stamping and forming device for a wave-wound sleeve according to claim 2, wherein the lower end stamping assembly (6) comprises two lower end assembling bases (601) that are symmetrically distributed left and right with a Y-axis of the assembling surface of the installation plate (3) as an axis, and are fixed to the installation plate (3) at an angle of 45 degrees with the Y-axis; a lower end stamping cylinder (602) is installed on the top of the lower end assembling base (601), and an output end of the lower end stamping cylinder (602) is fixed to a lower end connecting base (603); the lower end connecting base (603) is slidably connected to the assembling surface of the installation plate (3; and a lower end stamping die (604) matching with the lower end bottom die (9) is installed at one end of the lower end connecting base (603) close to the support assembly (4).

4. The 3D stamping and forming device for a wave-wound sleeve according to claim 2 or 3, wherein the side end stamping assembly (7) comprises two side end assembling plates (701) that are respectively arranged at an angle of 45 degrees with the adjacent upper end stamping assembly (5) on a same side; the side end assembling plates (701) are installed on the assembling surface of the installation plate (3); a side end stamping cylinder (702) is installed on each of the side end assembling plates (701); and a side end stamping die (703) matching with the side end bottom die (10) is installed at an output end of the side end stamping cylinder (702).

5. The 3D stamping and forming device for a wave-wound sleeve according to any one of the preceding claims, wherein middle parts of the two installation plates (3) are symmetrically provided with notches for loading and unloading the wave-wound sleeve.
